(19) Europäisches Patentamt
European Patent Office
Office européen des brevets

(11) **EP 3 766 846 A1**

(12) **EUROPÄISCHE PATENTANMELDUNG**

(43) Veröffentlichungstag:
**20.01.2021   Patentblatt 2021/03**

(51) Int Cl.:
**C03B 37/012** (2006.01)      **C03B 37/027** (2006.01)
**C03B 23/047** (2006.01)

(21) Anmeldenummer: **19186758.9**

(22) Anmeldetag: **17.07.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Heraeus Quarzglas GmbH & Co. KG**
**63450 Hanau (DE)**

(72) Erfinder:
• **ROSENBERGER, Manuel**
  **63450 Hanau (DE)**

• **HÜNERMANN, Michael**
  **63450 Hanau (DE)**
• **TROMMER, Martin**
  **63450 Hanau (DE)**
• **SCHUSTER, Kay**
  **63450 Hanau (DE)**
• **WEIMANN, Steffen**
  **63450 Hanau (DE)**

(74) Vertreter: **Staudt, Armin Walter**
**Sandeldamm 24a**
**63450 Hanau (DE)**

(54) **VERFAHREN ZUR HERSTELLUNG EINER HOHLKERNFASER UND ZUR HERSTELLUNG EINER VORFORM FÜR EINE HOHLKERNFASER**

(57)      Es sind Verfahren zur Herstellung einer Antiresonanten Hohlkernfaser bekannt, die einen sich entlang einer Faser-Längsachse erstreckenden Hohlkern und einen den Hohlkern umgebenden inneren Mantelbereich aufweist, der mehrere Antiresonanzelemente umfasst. Die bekannten Verfahren umfassen die Verfahrensschritte: des Bereitstellens eines Mantelrohres, das eine Mantelrohr-Innenbohrung und eine Mantelrohr-Längsachse aufweist, entlang der sich eine von einer Innenseite und einer Außenseite begrenzte Mantelrohr-Wandung erstreckt; des Bereitstellens einer Anzahl von rohrförmigen Antiresonanzelement-Vorformlingen; des Anordnens der Antiresonanzelement-Vorformlinge an Soll-Positionen der Innenseite der Mantelrohr-Wandung unter Bildung einer primären Vorform, die einen hohlen Kernbereich und einen inneren Mantelbereich aufweist; der Weiterverarbeitung der primären Vorform zu einer sekundären Vorform, wobei die Weiterverarbeitung ein Elongieren umfasst, und des Ziehens der sekundären Vorform zu der Hohlkernfaser. Um hiervon ausgehend eine hohe Präzision und eine exakte Positionierung der Antiresonanzelemente in einer ausreichend stabilen und reproduzierbaren Weise zu erreichen, wird erfindungsgemäß vorgeschlagen, dass beim Elongieren der primären Vorform mindestens einem Teil der vormaligen rohrförmigen Antiresonanzelement-Vorformlinge der primären Vorform eine ovale Außenquerschnittsform aufgeprägt wird, indem im hohlen Kernbereich und in den rohrförmigen Antiresonanzelement-Vorformlingen derselbe Innendruck erzeugt und aufrechterhalten wird.

**Fig. 3**

**Beschreibung**

Technischer Hintergrund

Die Erfindung betrifft ein Verfahren zur Herstellung einer Antiresonanten Hohlkernfaser, die einen sich entlang einer Faser-Längsachse erstreckenden Hohlkern und einen den Hohlkern umgebenden Mantelbereich, der eine Anzahl von Antiresonanzelementen umfasst, mit den Verfahrensschritten:

(a) Bereitstellen eines Mantelrohres, das eine Mantelrohr-Innenbohrung und eine Mantelrohr-Längsachse aufweist, entlang der sich eine von einer Innenseite und einer Außenseite begrenzte Mantelrohr-Wandung erstreckt,

(b) Bereitstellen einer Anzahl von rohrförmigen Antiresonanzelement-Vorformlingen,

(c) Anordnen der Antiresonanzelement-Vorformlinge an Soll-Positionen der Innenseite der Mantelrohr-Wandung unter Bildung einer primären Vorform, die einen hohlen Kernbereich und einen inneren Mantelbereich aufweist,

(d) Weiterverarbeitung der primären Vorform zu einer sekundären Vorform, aus der die Hohlkernfaser gezogen wird, wobei die Weiterverarbeitung ein Elongieren und optional eine einmalige oder wiederholte Durchführung von einem oder mehreren der folgenden Heißformprozesse umfasst:

(i) Kollabieren,

(ii) Kollabieren und gleichzeitiges Elongieren,

(iii) Aufkollabieren von zusätzlichem Mantelmaterial,

(iv) Aufkollabieren von zusätzlichem Mantelmaterial und anschließendes Elongieren,

(v) Aufkollabieren von zusätzlichem Mantelmaterial und gleichzeitiges Elongieren, und

(e) Ziehen der sekundären Vorform zu der Hohlkernfaser,

Außerdem betrifft die Erfindung ein Verfahren zur Herstellung einer Vorform für eine Antiresonante Hohlkernfaser, die einen sich entlang einer Faser-Längsachse erstreckenden Hohlkern und den Hohlkern umgebenden Mantelbereich aufweist, der mehrere Antiresonanzelemente umfasst, mit den Verfahrensschritten:

(a) Bereitstellen eines Mantelrohres, das eine Mantelrohr-Innenbohrung und eine Mantelrohr-Längsachse aufweist, entlang der sich eine von einer Innenseite und einer Außenseite begrenzte Mantelrohr-Wandung erstreckt,

(b) Bereitstellen einer Anzahl von rohrförmigen Antiresonanzelement-Vorformlingen,

(c) Anordnen der Antiresonanzelement-Vorformlinge an Soll-Positionen der Innenseite der Mantelrohr-Wandung unter Bildung einer primären Vorform, die einen hohlen Kernbereich und einen inneren Mantelbereich aufweist, und

(d) Optionale Weiterverarbeitung der primären Vorform zu einer sekundären Vorform für die Hohlkernfaser, wobei die Weiterverarbeitung ein Elongieren und optional eine einmalige oder wiederholte Durchführung von einem oder mehreren der folgenden Heißformprozesse umfasst:

(i) Kollabieren,

(ii) Kollabieren und gleichzeitiges Elongieren,

(iii) Aufkollabieren von zusätzlichem Mantelmaterial,

(iv) Aufkollabieren von zusätzlichem Mantelmaterial und anschließendes Elongieren,

(v) Aufkollabieren von zusätzlichem Mantelmaterial und gleichzeitiges Elongieren.

Herkömmliche Monomode-Lichtleitfasern aus Vollmaterial haben einen Kernbereich aus Glas, der von einem Mantelbereich aus Glas mit niedrigerem Brechungsindex umgeben ist. Die Lichtleitung beruht dabei auf Totalreflexion zwischen Kern- und Mantelbereich. Die Wechselwirkungen des geführten Lichtes mit dem Vollmaterial sind jedoch mit einer erhöhten Latenz bei der Datenübertragung und relativ niedrigen Schädigungsschwellen gegenüber energiereicher Strahlung verbunden.

Diese Nachteile vermeiden oder verringern "Hohlkernfasern", bei denen der Kern einen evakuierten, mit Gas oder Flüssigkeit gefüllten Hohlraum umfasst. In Hohlkernfasern ist die Wechselwirkung des Lichtes mit dem Glas geringer als in Vollkernfasern. Der Brechungsindex des Kerns ist kleiner als der des Mantels, so dass eine Lichtleitung durch Totalreflexion nicht möglich ist und das Licht normalerweise aus dem Kern in den Mantel entweichen würde. In Abhängigkeit vom physikalischen Mechanismus der Lichtleitung werden Hohlkernfasern unterteilt in "photonische Bandlückenfasern" und "Antiresonanz-Reflexionsfaser".

Bei "photonischen Bandlückenfasern" ist der hohle Kernbereich von einem Mantel umgeben, in dem kleine Hohlkanäle periodisch angeordnet sind. Die periodische Struktur der Hohlkanäle im Mantel bewirkt den in Anlehnung an die Halbleitertechnologie als "photonische Bandlücke" bezeichneten Effekt, wonach an den Mantelstrukturen gestreutes Licht bestimmter Wellenlängenbereiche aufgrund von Braggreflexion im zentralen Hohlraum konstruktiv interferiert und sich nicht transversal im Mantel ausbreiten kann.

Bei der als "Antiresonante Hohlkernfaser" ("antiresonant hollow-core fibers"; AR-HCF) bezeichneten Ausführungsform der Hohlkernfaser ist der hohle Kernbereich von einem inneren Mantelbereich umgeben, in dem sogenannte "antiresonante Elemente" (oder "Antiresonanzelemente"; kurz: "AREs") angeordnet sind. Die um den Hohlkern gleichmäßig verteilten Wandungen der Antiresonanzelemente können als in Antiresonanz betriebene Fabry-Perot-Kavitäten wirken, die das auftreffende Licht reflektieren und durch den Faserkern leiten.

Diese Fasertechnologie verspricht eine niedrige optische Dämpfung, ein sehr breites Transmissionsspektrum (auch im UV- oder IR-Wellenlängenbereich) und eine geringe Latenz bei der Datenübertragung.

Potentielle Anwendungen der Hohlkernfasern liegen auf dem Gebiet der Datenübertragung, der Hochleistungsstrahlführung, beispielsweise zur Materialbearbeitung, der Modalfilterung, der nichtlinearen Optik, insbesondere zur Superkontinuumserzeugung, vom ultravioletten bis infraroten Wellenlängenbereich.

Stand der Technik

Ein Nachteil Antiresonanter Hohlkernfasern liegt darin, dass Moden höherer Ordnung nicht zwangsläufig unterdrückt werden, so dass sie über große Übertragungslängen häufig nicht rein einmodig sind und sich die Qualität des Ausgangsstrahls verschlechtert.

Im Paper von Francesco Poletti "Nested antiresonant nodeless hollow core fiber"; Optics Express, Vol. 22, No. 20 (2014); DOI: 10.1364/OE 22.023807, wird ein Faserdesign vorgeschlagen, bei dem Antiresonanzelemente nicht als einfaches singuläres Strukturelement ausgebildet sind, sondern sich aus mehreren, miteinander verschachtelten (englisch: nested) Strukturelementen zusammensetzen. Die verschachtelten Antiresonanzelemente sind so ausgelegt, dass Kernmoden höherer Ordnung phasenangepasst an die Mantelmoden sind und unterdrückt werden, aber nicht die fundamentale Kernmode. Dadurch ist die Ausbreitung der fundamentalen Kernmode stets gewährleistet und die Hohlkernfaser kann über einen begrenzten Wellenlängenbereich effektiv einmodig gemacht werden.

Die effektive Modenunterdrückung hängt von der Mittenwellenlänge des übertragenen Lichts und von Strukturparametern des Faserdesigns ab, wie dem Radius des Hohlkerns und der Durchmesserdifferenz von verschachtelten Ringstrukturen in den Antiresonanzelementen.

Aus der EP 3 136 143 A1 ist eine Antiresonante Hohlkernfaser bekannt (dort bezeichnet als "Hohlkernfaser ohne Bandlücke"), bei der der Kern neben der Fundamentalmode noch weitere Moden leiten kann. Zu diesem Zweck ist er von einem inneren Mantel mit "nichtresonanten Elementen" umgeben, die eine Phasenanpassung von antiresonanten Moden mit den höheren Moden liefern. Die Herstellung der Hohlkernfaser erfolgt nach einer sogenannten "stack-and-draw-Technik", indem die Ausgangselemente zu einem achsenparallelen Ensemble angeordnet und zu einer Vorform fixiert werden und die Vorform anschließend elongiert wird. Hierbei wird ein Mantelrohr mit hexagonalem Innenquerschnitt verwendet und in den Innenkanten des Mantelrohres werden sechs sogenannte "ARE-Vorformen" (Anti-Resonanz-Element-Vorformen) fixiert. Diese Vorform wird in zwei Stufen zu einer Hohlkernfaser ausgezogen.

Aus der WO 2018/169487 A1 ist ein Verfahren zur Herstellung einer Vorform für antiresonante Hohlkernfasern bekannt, bei dem ein erster Mantelbereich eine Vielzahl an Stäben und ein zweiter Mantelbereich eine Vielzahl von Rohren umfasst, die von einem äußeren Mantelrohr umgeben sind. Stäbe, Rohre und Mantelrohr werden mittels "Stack and draw"-Technik zur Bildung einer Vorform zusammengefügt. Vor dem Elongieren der Vorform wird das Vorformende versiegelt, was durch Aufbringen einer Siegelmasse geschieht. Als Siegelmasse wird beispielsweise ein UV-Kleber eingesetzt.

Technische Aufgabenstellung

Antiresonante Hohlkernfasern und insbesondere solche mit verschachtelten Strukturelementen haben komplexe Innengeometrien, was ihre exakte und reproduzierbare Herstellung erschwert. Dies gilt umso mehr, da zur Einhaltung der Resonanzbeziehungsweise Antiresonanzbedingungen bereits geringe Maßabweichungen in der Größenordnung der Arbeitswellenlänge des zu führenden Lichts nicht tolerierbar sind. Abweichungen von der Soll-Geometrie können ihre Ursache bei der Konfiguration der Faser-Vorform haben, und sie können auch durch ungewollte nichtmaßstäbliche Verformungen beim Faserziehprozess auftreten.

Bei der bekannten "Stack-and-Draw"-Technik sind viele Elemente positionsgenau zusammenzufügen. Beispielsweise müssen zur Herstellung der aus dem eingangs genannten Paper bekannten Hohlkernfaser im "NANF"-Design sechs Antiresonanzelement-Vorformlinge, jeweils bestehend aus einem Hüllrohr und einseitig an der Hüllrohr-Innenmantelfläche eingeschweißter Innen-Kapillare, an der Innenseite eines Mantelrohrs angebracht werden.

Zur Realisierung geringer Dämpfungswerte und breiter Transmissionsbereiche ist neben einer gleichmäßigen Wandstärke der Wandungen der Antiresonanzelemente auch die azimutale Position der Antiresonanzelemente innerhalb des Mantelrohres wichtig. Dies ist mit der "Stack-and-Draw"-Technik nicht ohne Weiteres zu realisieren. Ziel der Erfindung ist, ein Verfahren zur kostengünstigen Herstellung einer Antiresonanten Hohlkernfaser anzugeben, das Beschränkungen herkömmlicher Herstellungsverfahren vermeidet.

Insbesondere ist es Ziel der Erfindung, ein Verfahren zur Herstellung einer Antiresonanten Hohlkernfaser und einer Vorform für Antiresonante Hohlkernfasern bereitzustellen, mit dem reproduzierbar eine hohe Präzision der Strukturelemente und eine exakte Positionierung der Antiresonanzelemente in der Faser in einer ausreichend stabilen und reproduzierbaren Weise erreicht werden kann.

Außerdem sollen Nachteile der klassischen "Stack and Draw"-Technik, mit der die erforderlichen Strukturgenauigkeiten, insbesondere eine gleichmäßige Wandstärke der Antiresonanzelemente und eine exakte Positionierung an vorgegebenen azimutalen Positionen nicht einfach zu erreichen ist, möglichst vermieden werden.

### Technische Aufgabenstellung

Antiresonante Hohlkernfasern und insbesondere solche mit verschachtelten Strukturelementen haben komplexe Innengeometrien, was ihre exakte und reproduzierbare Herstellung erschwert. Dies gilt umso mehr, da zur Einhaltung der Resonanzbeziehungsweise Antiresonanzbedingungen bereits geringe Maßabweichungen in der Größenordnung der Arbeitswellenlänge des zu führenden Lichts nicht tolerierbar sind. Abweichungen von der Soll-Geometrie können ihre Ursache bei der Konfiguration der Faser-Vorform haben, und sie können auch durch ungewollte nichtmaßstäbliche Verformungen beim Faserziehprozess auftreten.

Bei der bekannten "Stack-and-Draw"-Technik sind viele Elemente positionsgenau zusammenzufügen. Beispielsweise müssen zur Herstellung der aus dem eingangs genannten Paper bekannten Hohlkernfaser im "NANF"-Design sechs Antiresonanzelemente, jeweils bestehend aus einem Rohr und einseitig an der Rohrinnenwand eingeschweißter Kapillare an der Innenwand eines Mantelrohrs angebracht werden.

Zur Realisierung geringer Dämpfungswerte und breiter Transmissionsbereiche ist neben einer gleichmäßigen Wandstärke der Wandungen der Antiresonanzelemente auch die azimutale Position der Antiresonanzelemente innerhalb des Mantelrohres wichtig. Dies ist mit der "Stack-and-Draw"-Technik nicht ohne Weiteres zu realisieren. Ziel der Erfindung ist, ein Verfahren zur kostengünstigen Herstellung einer Antiresonanten Hohlkernfaser anzugeben, das Beschränkungen herkömmlicher Herstellungsverfahren vermeidet.

Insbesondere ist es Ziel der Erfindung, ein Verfahren zur Herstellung einer Vorform für Antiresonante Hohlkernfasern bereitzustellen, mit dem reproduzierbar eine hohe Präzision der Strukturelemente und eine exakte Positionierung der Antiresonanzelemente in einer ausreichend stabilen und reproduzierbaren Weise erreicht werden kann.

Außerdem sollen Nachteile der klassischen "Stack and Draw"-Technik, mit der die erforderlichen Strukturgenauigkeiten, insbesondere eine gleichmäßige Wandstärke der Antiresonanzelemente und eine exakte Positionierung an vorgegebenen azimutalen Positionen nicht einfach zu erreichen ist, möglichst vermieden werden.

### Zusammenfassung der Erfindung

Hinsichtlich des Verfahrens zur Herstellung der Antiresonanten Hohlkernfaser wird diese Aufgabe ausgehend von einem Verfahren der eingangs genannten Gattung erfindungsgemäß dadurch gelöst, dass beim Elongieren gemäß Verfahrensschritt (d) mindestens einem Teil der vormaligen rohrförmigen Antiresonanzelement-Vorformlinge der primären Vorform eine ovale Außenquerschnittsform aufgeprägt wird, indem im hohlen Kernbereich und in den rohrförmigen Antiresonanzelement-Vorformlingen derselbe Innendruck erzeugt und aufrechterhalten wird, und dass beim Ziehen der so erhaltenen sekundären Vorform zu der Hohlkernfaser gemäß Verfahrensschritt (e) in den elongierten, rohrförmigen Antiresonanzelement-Vorformlingen ein Überdruck gegenüber dem elongierten hohlen Kernbereich erzeugt und aufrechterhalten wird.

Ausgangspunkt für die Herstellung der Antiresonanten Hohlkernfaser ist eine Vorform, die hier auch als "primäre Vorform" bezeichnet wird. Die Herstellung der primären Vorform umfasst üblicherweise den Einbau und das Verbinden von Antiresonanzelement-Vorformlingen mit einem Mantelrohr unter Bildung eines sogenannten "Canes". Die primäre Vorform kann zu der Hohlkernfaser elongiert werden; in der Regel wird der primären Vorform aber zusätzliches Mantelmaterial hinzugefügt, um daraus eine hier als "sekundäre Vorform" bezeichnete Vorform zu erzeugen. Gegebenenfalls wird die Hohlkernfaser durch Elongieren der sekundären Vorform erzeugt. Alternativ werden die primäre Vorform oder die sekundäre Vorform unter Ausbildung eines koaxialen Ensembles von Bauteilen mit einem Überfangzylinder oder mit mehrere Überfangzylindern umgeben und das koaxiale Ensemble direkt zu der Hohlkernfaser elongiert. Der allgemeine Begriff "Vorform" wird hier zur Bezeichnung desjenigen Bauteils oder desjenigen koaxialen Ensembles von Bauteilen verstanden, aus der die Hohlkernfaser letztlich gezogen wird.

Das Hinzufügen von Mantelmaterial erfolgt beispielsweise durch Aufkollabieren eines Überfangzylinders auf die primäre Vorform. Die koaxiale Anordnung aus primärer Vorform und Überfangzylinder wird beim Aufkollabieren des Überfangzylinders elongiert, oder sie wird nicht elongiert. Dabei werden die Antiresonanzelement-Vorformlinge in ihrer Form oder Anordnung verändert, oder sie werden in ihrer Form oder Anordnung nicht verändert.

Die Herstellung der sekundären Vorform umfasst eine Anzahl von Verfahrensschritten, bei denen Ausgangselemente der Hohlkernfaser hergestellt und zueinander positioniert werden und mindestens einen Heißverformungsschritt. Jedes der Ausgangselemente und weist eine gewisse Abweichung von seiner Sollgeometrie auf und jeder Schritt der Positionierung und Umformung führt zwangsläufig zu Geometrieabweichungen, die sich in der fertigen Vorform zu einem absoluten Geometriefehler aufsummieren. Insbesondere die Heißumformung von Glas kann bei geringsten Abweichungen von einem idealen in der Regel zylindersymmetrischen Temperaturprofil der Heizzone zu einer ungewollten und nicht reproduzierbaren Verformung führen. Derartige Verformungen können auch auf Druck- und Temperaturverhältnissen beim Elongieren oder beim Faserziehprozess beruhen, die sich nur schwierig umgehen oder vermeiden lassen.

Das erfindungsgemäße Verfahren zielt darauf ab, die verformende Wirkung derartiger Druck- und Temperaturverhältnisse beim Elongieren und beim Faserziehprozess durch eine "Gegenverformung" zu kompensieren.

Zu diesem Zweck ist vorgesehen, dass das Elongieren der primären Vorform so geführt wird, dass nach Beendigung des Elongierschrittes mindestens ein Teil der vormaligen rohrförmigen Antiresonanzelement-Vorformlinge der primären Vorform eine ovale Außenquerschnittsform aufweist.

Beim Elongieren der primären Vorform wird zusätzliches Mantelmaterial aufgebracht, oder es wird kein zusätzliches Mantelmaterial aufgebracht. Ergebnis des Elongierschritts ist eine sekundäre Vorform oder Ergebnis ist ein anderes Halbzeug in Form der elongierten primären Vorform, welche gegebenenfalls einer weiteren Verarbeitung zur sekundären Vorform bedarf. Die sekundäre Vorform wird abschließend zu der Antiresonanten Hohlkernfaser gezogen, indem in den elongierten, rohrförmigen Antiresonanzelement-Vorformlingen ein Überdruck gegenüber dem elongierten hohlen Kernbereich erzeugt und aufrechterhalten wird. Auf diese Weise wird eine Antiresonante Hohlkernfaser erhalten, bei der die Antiresonanzelemente einen weitgehend runden Querschnitt haben.

Es hat sich als günstig erwiesen, wenn die meisten - vorzugsweise alle - ursprünglich runden Strukturelemente der ehemaligen primären Vorform im Elongierprozess geometrisch so verändert werden, dass sie nach dem Elongierprozess eine nicht-runde, ovale und im Idealfall elliptische radiale Querschnittsform haben. Denn im nachfolgenden Faserziehprozess findet eine weitere geometrische Veränderung statt, infolge der Hohlräume mit ovalem radialem Querschnitt zu Hohlräumen mit rundem radialem Querschnitt umgeformt werden.

Die Antiresonanzelement-Vorformlinge können aus einem Strukturelement, wie etwa einem einfachen Rohrelement, oder aus mehreren Strukturelementen zusammengesetzt sein.

Im Fall mehrerer Strukturelemente sind diese beispielsweise miteinander verschachtelt und bilden im einfachsten Fall ein Hüllrohr, in das eine Innen-Kapillare eingesetzt ist, wird zum Aufprägen der ovalen Außenquerschnittsform des Hüllrohres das Verhältnis der normalen Kraft im oberen Scheitelpunkt zur resultierenden Normalkraft an den Seiten des Hüllrohres zwischen 1,07 und 1,27 eingestellt.

Zum Aufprägen der ovalen Außenquerschnittsform der Innen-Kapillare genügt bereits das Verhältnis der normalen Kraft im oberen Scheitelpunkt zur resultierenden Normalkraft an den Seiten der Kapillar-Wandung im Bereich zwischen 1,01 und 1,05.

Es wurde gefunden, dass sich ein für die Gegenverformung günstiges Maß an Ovalität der Querschnittsform der elongierten Strukturelemente durch die Längen ihrer längsten und kürzesten Achsen (im Querschnitt) beschreiben lässt.

Bei einer besonders bevorzugten Verfahrensweise, die sich auf Antiresonanzelement-Vorformlinge aus einem einfachen rohrförmigen Strukturelement bezieht, haben die Rohrelemente eine ovale, vorzugsweise elliptische, Außenquerschnittsform mit dem Achsenlängenverhältnis $A_L/A_K$ im Bereich zwischen 1,07 und 1,27.

Eine weitere besonders bevorzugte Verfahrensweise bezieht sich auf Antiresonanzelement-Vorformlinge, die sich aus mehreren, miteinander verschachtelten Strukturelementen zusammensetzen und mindestens ein Hüllrohr und eine in dem Hüllrohr und parallel zur Hüllrohr-Längsachse verkaufende Innen-Kapillare umfassen.

Bei derartigen Antiresonanzelement-Vorformlingen ist die Innen-Kapillare an der Innenseite der Hüllrohr-Wandung fixiert. Bei einem zu kleinen Kontaktbereich zwischen der Innen-Kapillare und dem Hüllrohr kann es - auch aufgrund der Oberflächenspannung bei einem Heißformprozesse dazu kommen, dass es zur Ablösung und Dezentrierung der Innen-Kapillare innerhalb des Hüllrohres kommt. Um dem entgegenzuwirken, hat es sich als vorteilhaft erwiesen, wenn die Hüllrohre eine ovale, vorzugsweise elliptische, Außenquerschnittsform mit dem Achsenlängenverhältnis $A_L/A_K$ im Bereich zwischen 1,07 und 1,27 haben, und die Innen-Kapillare haben eine ovale, vorzugsweise elliptische, Außenquerschnittsform mit dem Achsenlängenverhältnis $A_L/A_K$ im Bereich zwischen 1,01 und 1,05.

Die vergleichsweise große Ovalität der Hüllrohre bewirkt eine Vergrößerung des Kontaktbereichs mit den Innen-Kapillaren. Neben dem Achsenlängenverhältnis ist dabei auch die Orientierung der Ovale an der Innenmantelfläche des ehemaligen Mantelrohres zu beachten: nämlich so, dass jeweils die kürzeste Querschnittsachse $A_K$ von der Mantelrohr-Längsachse aus gesehen in radialer Richtung verläuft, und die längste Querschnittsachse $A_L$ verläuft tangential zur ehemaligen Innenmantelfläche.

Insbesondere im Hinblick auf eine hohe Reinheit der Hüllrohre werden diese bevorzugt in einem Vertikalziehverfahrens ohne Formwerkzeug mit einem zweistufigen Elongierprozess erzeugt, das folgende Verfahrensschritte umfasst:

(aa) Bereitstellen eines Ausgangshohlzylinders aus Glas, der eine ZylinderLängsachse und eine äußere sowie eine innere Zylindermantelfläche aufweist,

(bb) mechanische Bearbeitung der Zylindermantelflächen zur Einstellung von Ausgangshohlzylinder-Endmaßen, umfassend einen Außendurchmesser $C_a$ von mindestens 90 mm, einen Innendurchmesser $C_i$ und ein Durchmesserverhältnis $C_a/C_i$ von weniger als 2,8,

(cc) einen ersten Elongierprozess, bei dem der Ausgangshohlzylinder mit vertikal orientierter Längsachse kontinuierlich einer ersten Heizzone mit einer ersten Heizzonenlänge $L_{H1}$ zugeführt, darin bereichsweise erweicht und aus dem erweichten Bereich ein Zwischenzylinder abgezogen wird,

(dd) einen zweiten Elongierprozess, bei dem der Zwischenzylinder oder ein aus dem Zwischenzylinder durch Elongieren erhaltener elongierter Zwischenzylinder mit vertikal orientierter Längsachse kontinuierlich einer zweiten Heizzone mit einer zweiten Heizzonenlänge $L_{H2}$ zugeführt, darin bereichsweise erweicht und aus dem erweichten Bereich ein Rohrstrang mit einem Außendurchmesser $T_a$ und einem Innendurchmesser $T_i$ abgezogen wird, wobei gilt:

$$L_{H2} < L_{H1} \text{ und } T_a/T_i < 1{,}5,$$

und

(ee) Ablängen des Rohrstrangs zu Hüllrohren.

Die primäre Vorform hat vor dem Elongieren vorzugsweise einen Außendurchmesser im Bereich von 20 bis 70 mm.

Denn je größer der Durchmesser ist, umso langsamer ist die Nachführgeschwindigkeit beim Elongieren und umso länger ist die Dauer, der jedes axiale Teilstück der Vorform der hohen Temperatur der Heizzone ausgesetzt ist. Bei zu langsamer Nachführgeschwindigkeit beim Elongieren deformieren jedoch die Strukturelemente der Antiresonanzelement-Vorformlinge. Daher liegt der Durchmesser der primären Vorform vorzugsweise bei maximal 70 mm. Und der Durchmesser der primären Vorform beträgt vorzugsweise mindestens 20 mm. Denn es hat sich gezeigt, bei kleineren Durchmessern die thermische Trägheit der Vorform zu gering ist, um etwaige Temperaturschwankungen in der Heizzone auszugleichen.

Bei einer bevorzugten Verfahrensweise wird beim Elongieren die primäre Vorform kontinuierlich einer Heizzone mit einer Zufuhrgeschwindigkeit zugeführt, in der Heizzone zonenweise erweicht, und mit einer Abzugsgeschwindigkeit aus der Heizzone abgezogen wird.

Bei zu hoher Zufuhrgeschwindigkeit kann es zu Temperaturgradienten in der primären Vorform kommen, der dazu führen kann, dass die darin auf verschiedenen radialen Positionen verteilten Antiresonanzelement-Vorformlinge unterschiedliches Elongierverhalten zeigen. Eine zu geringe Zufuhrgeschwindigkeit kann zu unerwünschten Deformationen der Antiresonanzelement-Vorformlinge führen. Als geeigneter Kompromiss hat es sich erwiesen, wenn die Zufuhrgeschwindigkeit so eingestellt wird, dass sich ein Durchsatz von mindestens 0,8 g/min, bevorzugt ein Durchsatz im Bereich von 0,8 g/min bis 85 g/min, und besonders bevorzugt ein Durchsatz im Bereich von 3,3 g/min bis 85 g/min, und eine mittlere Aufenthaltsdauer in der Heizzone von weniger als 25 min, bevorzugt eine mittlere Aufenthaltsdauer im Bereich von 5 bis 25 min ergeben.

Die Temperatur der Heizzone beim Heißformprozess sollte möglichst konstant sein. Vorteilhafterweise wird daher beim Heißformprozess gemäß Verfahrensschritt (d) ein temperaturgeregeltes Heizelement eingesetzt, dessen Soll-Temperatur auf +/- 0.1°C genau gehalten wird.

Dadurch können Temperaturschwankungen im Heißformprozess auf weniger als +/- 0.5°C begrenzt werden.

Zur Verminderung absoluter Geometriefehler ist ein großes Ausziehverhältnis beim Elongieren erwünscht. Andererseits geht ein großes Ausziehverhältnis mit entsprechend großen Umformprozesse und Materialbewegungen einher, was leicht zu unerwünschten Deformationen bei den filigranen Strukturelementen der Antiresonanzelement-Vorformlinge führen kann.

Als geeigneter Kompromiss hat sich als vorteilhaft erwiesen, wenn das Ausziehverhältnis beim Elongieren auf einen Wert im Bereich von 1,05 bis 10, vorzugsweise auf einen Wert im Bereich von 1,05 bis 5 eingestellt wird.

Bei einer bevorzugten Verfahrensvariante umfasst das Anordnen der Antiresonanzelement-Vorformlinge und/oder das Elongieren der primären Vorform, und/oder das Ziehen der Hohlkernfaser eine Fixierungs-Maßnahme und/oder eine Versiegelungsmaßnahme unter Einsatz einer amorphe $SiO_2$-Partikel enthaltenden Versiegelungs- oder Verbindungsmasse.

Die zum Versiegeln oder Fixieren eingesetzte Versiegelungs- oder Verbindungsmasse enthält amorphe $SiO_2$-Partikel, die beispielsweise in einer Dispersionsflüssigkeit aufgenommen sind. Diese Masse wird zwischen den zu verbindenden beziehungsweise zu versiegelnden Flächen aufgetragen und ist beim Einsatz in der Regel pastös. Beim Trocknen bei niedriger Temperatur wird die Dispersionsflüssigkeit teilweise oder vollständig entfernt und die Masse verfestigt. Die Versiegelungs- oder Verbindungsmasse und insbesondere die nach dem Trocknen erhaltene, verfestigte $SiO_2$-haltige Versiegelungs- oder Verbindungsmasse genügt den Anforderungen zur Fixierung und Verdichtung. Die zum Trocknen erforderliche Temperatur liegt unterhalb von 300 °C, was die Einhaltung der Maßhaltigkeit der Vorform begünstigt und thermische Beeinträchtigungen vermeidet. Ein Erhitzen auf höhere Temperaturen um 800 °C, beispielsweise beim Elongieren der Vorform zur Hohlkernfaser, führt zu einer weiteren thermischen Verfestigung der Versiegelungs- oder Verbindungsmasse, die auch geeignet ist, opakes oder transparentes Glas zu bilden. Dies geschieht durch Sintern oder Verglasen, wobei das Sintern zu opakem Glas vergleichsweise niedrigere Temperaturen und/oder kurze Erhitzungsdauern erfordert als ein Verglasen bis zur vollständigen Transparenz. Die Versiegelungs- oder Verbindungsmasse kann somit durch Erwärmen vollständig verdichtet und durch Erhitzen beim Heißformprozess verglast werden.

Beim Heißformprozess zersetzt sich die Versiegelungs- oder Verbindungsmasse nicht und sie setzt wenig an Verunreinigungen frei. Sie zeichnet sich somit durch thermische Stabilität und Reinheit beim Heißformprozess aus und sie vermeidet Verformungen infolge unterschiedlicher thermischer Ausdehnungskoeffizienten.

Die Versiegelungs- und Verbindungsmasse ist auch vorteilhaft einsetzbar, um beim Elongieren der primären Vorform und/oder beim Ziehen der Hohlkernfaser offene Enden der Antiresonanzelement-Vorformlinge und/oder einzelne Strukturelemente der Antiresonanzelement-Vorformlinge und/oder ein etwaigen Ringspalt zwischen Rohrelementen zu verschleißen.

Auf diese Weise können die einzelnen Bestandteile der primären Vorform und/oder sekundären Vorform beim Elongieren beziehungsweise beim Faserziehprozess unterschiedlichen Innendrücken ausgesetzt werden.

Die Exaktheit der Positionierung der Vorformlinge an der Innenmantelfläche des Mantelrohrs wird weiter verbessert, indem die Mantelrohr-Innenseite und/oder die Mantelrohr-Außenseite und/oder die Hüllrohre-Innenseite und/oder die Hüllrohr-Außenseite durch spanende Bearbeitung erzeugt wird, insbesondere durch Bohren, Fräsen, Schleifen, Honen und/oder Polieren

Diese Bearbeitungstechniken liefern im Vergleich zu anderen bekannten Umformtechniken unter Einsatz von Hitze und Druck genauere und filigranere Strukturen und sie vermeiden Verunreinigungen der Oberflächen durch Formwerkzeuge, wie beispielsweise Düsen, Pressen oder Schmelzformen.

Die spanende mechanische Bearbeitung umfasst vorzugsweise auch eine Strukturierung der Mantelrohr-Innenseite im Bereich von Soll-Positionen der Antiresonanzelement-Vorformlinge, indem diese mit einer sich in Richtung der Mantelrohr-Längsachse erstreckenden Längsstruktur versehen wird. Diese Längsstruktur umfasst beispielsweise Längsschlitze und/oder oder Längsrillen in der Mantelrohr-Innenwandung, die parallel zur Mantelrohr-Längsachse verlaufen und die bevorzugt durch Bohren, Sägen, Fräsen Schneiden oder Schleifen erzeugt werden.

Die sich in Richtung der Mantelrohr-Längsachse erstreckende Längsstruktur dient als Positionierungshilfe für die Antiresonanzelement-Vorformlinge. Sie erleichtert, dass die Antiresonanzelement-Vorformlinge vorgegebene definierte Positionen an der Innenseite des Mantelrohres einnehmen.

Die Genauigkeit der Positionierung der Vorformlinge an der Innenmantelfläche des Mantelrohrs wird verbessert, wenn die oberen stirnseitigen Enden der Strukturelemente mittels einer Positionierungsschablone an der Soll-Position positioniert werden.

Die Positionierungsschablone weist beispielsweise einen in die Mantelrohr-Innenbohrung ragenden Schaft auf, der mit Halteelementen in Form mehrerer radial nach außen weisender Haltearme versehen ist.

Die konstruktiv vorgegebene sternförmige Anordnung der Halteelemente erleichtert die exakte Positionierung der Antiresonanzelement-Vorformlinge an den jeweiligen Soll-Positionen und deren Fixierung, beispielsweise mittels der ober erläuterten Versiegelungs- oder Verbindungsmasse. Dabei wird die Positionierungsschablone vorzugsweise ausschließlich im Bereich der Mantelrohr-Stirnseiten eingesetzt, vorzugsweise im Bereich beider Mantelrohr-Stirnseiten.

Es hat sich außerdem eine Verfahrensweise bewährt, bei der beim Elongieren der primären Vorform gemäß Verfahrensschritt (d) und/oder beim Ziehen der Hohlkernfaser gemäß Verfahrensschritt (e) mehrere Bestandteile der Vorform aus Quarzglas gemeinsam erhitzt und erweicht werden, wobei das Quarzglas mindestens einiger der Vorform-Bestandteile mindestens einen Dotierstoff enthält, der die Viskosität von Quarzglas absenkt.

Bestandteile der primären Vorform umfassen das Mantelrohr und die darin angeordneten Antiresonanzelement-Vorformlinge. Die sekundäre Vorform enthält zusätzliches Mantelmaterial, das beispielsweise in Form eines Überfangzylinders oder mehrerer Überfangzylinder bereitgestellt und auf die primäre Vorform aufkollabiert wird.

Als die Viskosität von Quarzglas absenkende Dotierstoffe kommen vorzugsweise Fluor, Chlor und/oder Hydroxylgruppen zum Einsatz.

Die Dotierung ermöglicht die Anpassung der thermischen Ausdehnungskoeffizienten von benachbarten Vorform-Bestandteilen, um Spannungen zu vermeiden oder zu vermindern. Sie kann auch dazu eingesetzt werden, die thermische Stabilität eines Bestandteils zu Gunsten der Stabilität eines benachbarten Bestandteils zu verringern.

So hat es sich beispielsweise als günstig erwiesen, wenn das Quarzglas des Mantelrohres bei einer Messtemperatur von 1250 °C eine um mindestens 0,5 dPa.s höhere Viskosität, vorzugsweise eine um mindestens 0,6 dPa.s, höhere Viskosität, aufweist als das Quarzglas von zusätzlich aufgebrachtem Mantelmaterial (bei Angabe der Viskosität als logarithmischer Wert in dPas).

Insbesondere im Hinblick auf eine geringe optische Dämpfung und eine große optische Übertragungs-Bandbreite der Hohlkernfaser hat es sich als besonders vorteilhaft erwiesen, wenn die Antiresonanzelemente um den Hohlkern mit einer ungeradzahligen Symmetrie angeordnet sind.

Hinsichtlich der Herstellung der Vorform für die Hohlkernfaser wird die oben angegebene technische Aufgabe ausgehend von einem Verfahren der eingangs genannten Gattung erfindungsgemäß dadurch gelöst, dass nach dem Elongieren gemäß Verfahrensschritt (d) mindestens ein Teil der vormaligen rohrförmigen Antiresonanzelement-Vorformlinge der primären Vorform eine ovale Außenquerschnittsform aufweist, mit einer längsten Querschnittsachse $A_L$ und einer kürzesten Querschnittsachse $A_K$, wobei das Achsenlängenverhältnis $A_L/A_K$ im Bereich zwischen 1,01 und 1,27 liegt, und wobei die kürzeste Querschnittsachse $A_K$ von der Mantelrohr-Längsachse aus gesehen in radialer Richtung verläuft.

Beim Elongieren der primären Vorform wird zusätzliches Mantelmaterial aufgebracht, oder es wird kein zusätzliches Mantelmaterial aufgebracht. Ergebnis des Elongierschritts ist eine sekundäre Vorform oder Ergebnis ist ein anderes Halbzeug in Form der elongierten primären Vorform, welche gegebenenfalls einer weiteren Verarbeitung zur sekundären Vorform bedarf. In jedem Fall zeichnet sich die elongierte primäre Vorform dadurch aus, dass mindestens ein Teil der Antiresonanzelement-Vorformlinge eine ovale Querschnittsform haben, die einerseits dazu geeignet ist, einer Verformung entgegenzuwirken, die beim Elongieren der sekundären Vorform zur Hohlkernfaser stattfinden kann, und die andererseits die Kontaktbereiche zwischen verschachtelten Strukturelementen vergrößern und damit zu einer höheren mechanischen Stabilität beitragen kann. Diese Verfahrensweise ermöglicht eine präzisere Fertigung der Hohlkernfaser.

Maßnahmen zur Herstellung der Vorform sind weiter oben im Zusammenhang der Herstellung der Hohlkernfaser erläutert und diese Erläuterungen werden hiermit einbezogen.

Definitionen

Einzelne Verfahrensschritte und Begriffe der obigen Beschreibung werden im Folgenden ergänzend definiert. Die Definitionen sind Bestandteil der Beschreibung der Erfindung. Bei einem sachlichen Widerspruch zwischen einer der folgenden Definitionen und der übrigen Beschreibung ist das in der Beschreibung Gesagte maßgeblich.

Antiresonanzelemente

Die Antiresonanzelemente können einfache oder verschachtelte Strukturelemente der Hohlkernfaser sein. Sie haben mindestens zwei Wandungen, die aus Richtung des Hohlkerns gesehen eine negative Krümmung haben (konvex) oder keine Krümmung haben (plan, gerade). Sie bestehen in der Regel aus einem Material, das für das Arbeitslicht transparent ist, beispielsweise aus Glas, insbesondere aus dotiertem oder nicht dotiertem $SiO_2$, einem Kunststoff, insbesondere aus einem Polymer, aus einem Verbundwerkstoff oder aus kristallinem Material.

Antiresonanzelement-Vorformling / Antiresonanzelement-Vorstufe

Als Antiresonanzelement-Vorformlinge werden Bauteile oder Bestandteile der Vorform bezeichnet, die im Wesentlichen durch einfaches Langziehen beim Faserziehprozess zu Antiresonanzelementen in der Hohlkernfaser werden. Als Antiresonanzelement-Vorstufen werden Bauteile oder Bestandteile der Vorform bezeichnet, die erst durch Umformung zu Antiresonanzelement-Vorformlingen oder direkt zu Antiresonanzelementen werden. Die Antiresonanzelement-Vorformlinge können einfache oder verschachtelte Bauteile sein, an denen zusätzlich Positionierhilfen fixiert sein können. Sie liegen ursprünglich in der primären Vorform (Cane) vor.

Durch Weiterverarbeitung der primären Vorform, insbesondere durch Heißumformschritte, können Zwischenprodukte entstehen, in denen die ursprünglichen Antiresonanzelement-Vorformlinge in einer gegenüber der ursprünglichen Form veränderten Form vorliegen. Die veränderte Form wird hier ebenfalls als Antiresonanzelement-Vorformling oder auch als Antiresonanzelement-Vorstufe bezeichnet.

Vorform / primäre Vorform / sekundäre Vorform

Die Vorform ist dasjenige Bauteil, aus dem die Antiresonante Hohlkernfaser gezogen wird. Es ist eine primäre Vorform oder eine durch Weiterverarbeitung der primären Vorform erzeugte sekundäre Vorform. Die Weiterverarbeitung der primären Vorform zu einer sekundären Vorform, aus der die Hohlkernfaser gezogen wird, kann eine einmalige oder wiederholte Durchführung von einem oder mehreren der folgenden Heißformprozesse umfassen:

    (i) Elongieren,

    (ii) Kollabieren,

    (iii) Kollabieren und gleichzeitiges Elongieren,

    (iv) Aufkollabieren von zusätzlichem Mantelmaterial,

    (v) Aufkollabieren von zusätzlichem Mantelmaterial und anschließendes Elongieren,

    (vi) Aufkollabieren von zusätzlichem Mantelmaterial und gleichzeitiges Elongieren.

## Elongieren / Kollabieren

Beim Elongieren wird die primäre Vorform gelängt. Die Längung kann ohne gleichzeitiges Kollabieren erfolgen. Das Elongieren kann maßstäblich erfolgen, so dass sich beispielsweise die Form und Anordnung von Bauteilen oder Bestandteilen der primären Vorform im elongierten Endprodukt widerspiegeln. Beim Elongieren kann die primäre Vorform aber auch nicht-maßstäblich gezogen und ihre Geometrie verändert werden.

Beim Kollabieren wird eine Innenbohrung verengt oder Ringspalte zwischen rohrförmigen Bauteil werden geschlossen oder verengt. Das Kollabieren geht in der Regel mit einem Elongieren einher.

## Hohlkern / Innerer Mantelbereich / Äußerer Mantelbereich / Cane

Das Ensemble aus mindestens einem Mantelrohr und darin lose aufgenommenen oder fest fixierten Vorformlingen oder Vorstufen für Antiresonanzelemente wird hier auch als "primäre Vorform" oder "Cane" bezeichnet. Die primäre Vorform (Cane) umfasst den Hohlkern und einen Mantelbereich. Dieser Mantelbereich wird auch als "innerer Mantelbereich" bezeichnet, wenn es auch einen "äußeren Mantelbereich" gibt, der beispielsweise durch Aufkollabieren auf den Cane erzeugt worden ist, und wenn zwischen diesen Mantelbereichen unterschieden werden soll. Die Bezeichnungen "innerer Mantelbereich" und "äußerer Mantelbereich" werden auch für die entsprechenden Bereiche in der Hohlkernfaser oder in Zwischenprodukten genutzt, die durch Weiterverarbeitung der primären Vorform erhalten werden.

Die Bezeichnung "Rohrinnenseite" wird auch als Synonym für "Rohr-Innenmantelfläche" und die Bezeichnung "Rohraußenseite" wird auch als Synonym für "Rohr-Außenmantelfäche" verwendet. Der Begriff "Innenbohrung" in Verbindung mit einem Rohr besagt nicht, dass die Innenbohrung durch einen Bohrvorgang erzeugt worden ist.

## Spanende Bearbeitung

Darunter werden trennende mechanische Fertigungsverfahren zur trennenden Bearbeitung eines Werkstücks verstanden, insbesondere Drehen, Schneiden, Bohren, Sägen, Fräsen und Schleifen. Durch diese Bearbeitung wird eine sich in Richtung der Mantelrohr-Längsachse erstreckende Längsstruktur geschaffen, die als Positionierungshilfe für die Antiresonanzelement-Vorformlinge dient. Die Längsstruktur ist von der Mantelrohr-Innenmantelfläche zugänglich; sie kann sich auch bis zur Außenmantelfläche durch die gesamte Mantelrohr-Wandung erstrecken.

## Teilchengröße und Teilchengrößenverteilung

Teilchengröße und Teilchengrößenverteilung der SiO$_2$-Partikel werden anhand der D$_{50}$-Werte charakterisiert. Diese Werte werden aus Partikelgrößen-Verteilungskurven entnommen, die das kumulative Volumen der SiO$_2$-Partikel in Abhängigkeit von der Partikelgröße zeigen. Die Teilchengrößenverteilungen werden häufig anhand der jeweiligen D$_{10}$-, D$_{50}$- und D$_{90}$-Werte charakterisiert. Dabei kennzeichnet der D$_{10}$-Wert diejenige Teilchengröße, die von 10% des kumulativen Volumens der SiO$_2$-Teilchen nicht erreicht wird, und dementsprechend der D$_{50}$-Wert und der D$_{90}$-Wert diejenige Partikelgrößen, die von 50% beziehungsweise von 90% des kumulativen Volumens der SiO$_2$-Partikel nicht erreicht wird. Die Partikelgrößenverteilung wird durch Streulicht- und Laserbeugungsspektroskopie nach ISO 13320 ermittelt.

## Ausführungsbeispiel

Nachfolgend wird die Erfindung anhand eines Ausführungsbeispiels und einer Zeichnung näher erläutert. Im Einzelnen zeigt

**Figur 1** eine primäre Vorform mit einem Mantelrohr und darin positionierten und fixierten Antiresonanzelement-Vorformlingen zur Herstellung einer Vorform für eine Hohlkernfaser anhand einer Ansicht auf den radialen Querschnitt in schematischer Darstellung,

**Figur 2** ein Foto einer sekundären Vorform mit vorgeformten Antiresonanzelement-Vorformligen in einer Ansicht auf den radialen Querschnitt,

**Figur 3** Bearbeitungsstufen von der primären Vorform bis zur Antiresonanten Hohlkernfaser, und

**Figur 4** eine Skizze zur Erläuterung von Kraftverhältnissen beim Heißverarbeiten verschachtelter Antiresonanzelemente.

Bei der Herstellung der Hohlkernfaser beziehungsweise der Vorform für die Hohlkernfaser sind eine Vielzahl von Bauteilen miteinander zu verbinden. Darüber hinaus kann es bei der Durchführung von Heißformprozessen hilfreich sein, vorhandene Spalte oder Kanäle der Vorform zu versiegeln. Zum Verbinden beziehungsweise zur Versiegelung wird eine auf SiO$_2$ basierende Versiegelungs- oder Verbindungsmasse eingesetzt, wie sie aus der DE 10 2004 054 392 A1 bekannt ist. Dabei wird durch Nassvermahlen von Quarzglaskörnung ein wässriger Schlicker erzeugt, der amorphe SiO$_2$-Partikel mit einer Partikelgrößenverteilung enthält, die durch einen D$_{50}$-Wert von etwa 5 $\mu$m und durch einen D$_{90}$-Wert von etwa 23 $\mu$m gekennzeichnet ist. Dem Basisschlicker wird weitere amorphe SiO2-Körnung mit einer mittleren Korngröße von etwa 5 $\mu$m zugemischt. Der als Verbindungsmasse eingesetzte Schlicker hat einen Feststoffgehalt von 90%, der zu mindestens 99,9 Gew.-% aus SiO$_2$ besteht.

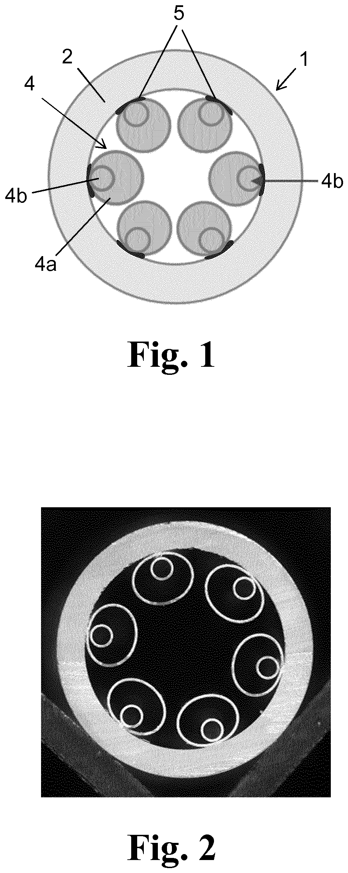

**Figur 1** zeigt schematisch einen Cane (primäre Vorform) mit einem Mantelrohr 1 mit einer Mantelrohr-Wandung 2, an deren Innenmantelfläche an zuvor definierten azimutalen Positionen im gleichmäßigen Abstand Antiresonanzelement-Vorformlinge 4 fixiert sind; im Ausführungsbeispiel sind es sechs Vorformlinge 4, in einer anderen, nicht dargestellten bevorzugten Ausführungsform ist es eine ungeradzahlige Anzahl von Vorformlingen.

Das Mantelrohr 1 besteht aus Quarzglas und hat eine Länge von 1000 mm, einen Außendurchmesser von 27 mm und einen Innendurchmesser von 20 mm. Die Antiresonanzelement-Vorformlinge 4 liegen als Ensemble miteinander verschachtelter Strukturelemente aus einem Außenrohr 4a und einer Innen-Kapillare 4b vor. Das Außenrohr 4a hat einen Außendurchmesser von 6,2 mm und die Innen-Kapillare 4b hat einen Außendurchmesser von 2,5 mm. Die Wandstärke beider Strukturelemente (4a; 4b) ist gleich und beträgt 0,3 mm. Die Längen von Außenrohr 4a und Innen-Kapillare 4b entsprechen der Mantelrohr-Länge 1.

Das Hüllrohr 4a wird in einem Vertikalziehverfahren ohne Formwerkzeug mit zweistufigem Elongierprozess hergestellt. In der ersten Stufe wird ein Ausgangshohlzylinders aus Glas zur Einstellung von Ausgangshohlzylinder-Endmaßen mechanisch bearbeitet. Laut Endmaß beträgt der Außendurchmesser 90 mm und das Durchmesserverhältnis von Außen- und Innendurchmesser beträgt 2,5. Der Ausgangszylinder wird in einem ersten Elongierprozess mit vertikal orientierter Längsachse kontinuierlich einer Heizzone mit einer Heizzonenlänge von 200 mm zugeführt, darin bereichsweise erweicht und aus dem erweichten Bereich wird ein Zwischenzylinder abgezogen. Dieser wird in einem zweiten Elongierprozess mit vertikal orientierter Längsachse kontinuierlich einer anderen Heizzone mit einer Heizzonenlänge von 100 mm zugeführt, darin bereichsweise erweicht und aus dem erweichten Bereich ein Rohrstrang abgezogen. Aus dem Rohrstrang wird das Hüllrohr durch Ablängen erhalten.

Die Fixierung der Antiresonanzelement-Vorformlinge 4 an der Innenwand des Mantelrohrs 1 erfolgt mittels der auf SiO$_2$ basierenden Verbindungsmasse 5.

Die Verbindungsmasse 5 wird auf der Mantelrohr-Innenmantelfläche lokal im Bereich der stirnseitigen Enden aufgetragen und die Antiresonanzelement-Vorformlinge werden darauf unter Einsatz einer Positionierungs-Schablone mit konstruktiv vorgegebener sternförmiger Anordnung von Haltearmen für die einzelnen Antiresonanzelement-Vorformlinge 4 aufgesetzt. Die PositionierungsSchablone ist dabei auf den Bereich um die beiden stirnseitigen Mantelrohr-Enden beschränkt.

Durch diese Methode wird eine genaue und reproduzierbare Verbindung zwischen Mantelrohr 1 und Antiresonanzelement-Vorformlingen 4 geschaffen. Zur Fixierung genügt eine Verfestigung der Verbindungsmasse 5 bei niedriger Temperatur unterhalb von 300 °C, so dass eine starke Erwärmung der umliegenden Bereiche und somit wird eine Verformung Antiresonanzelement-Vorformlinge 4 vermieden wird.

Die primäre Vorform 1 wird mit einem Überfangzylinder aus Quarzglas überfangen, wobei der Überfangzylinder auf das Mantelrohr 1 aufkollabiert, und gleichzeitig wird das Rohr-Ensemble zu einer sekundären Vorform elongiert. Der Überfangzylinder hat einen Außendurchmesser von 63,4 mm und eine Wandstärke von 17 mm.

Beim Kollabier- und Elongierprozess wird die koaxiale Anordnung von Mantelrohr 1 und Überfangzylinder bei vertikal orientierter Längsachse von unten kommend einer temperaturgeregelten Heizzone zugeführt und darin mit dem oberen Ende der Anordnung beginnend zonenweise erweicht.

Die Heizzone wird auf eine Soll-Temperatur von 1600 °C mit einer Regelgenauigkeit von +/- 0.1 °C gehalten. Dadurch können Temperaturschwankungen im Heißformprozess auf weniger als +/- 0.5°C begrenzt werden.

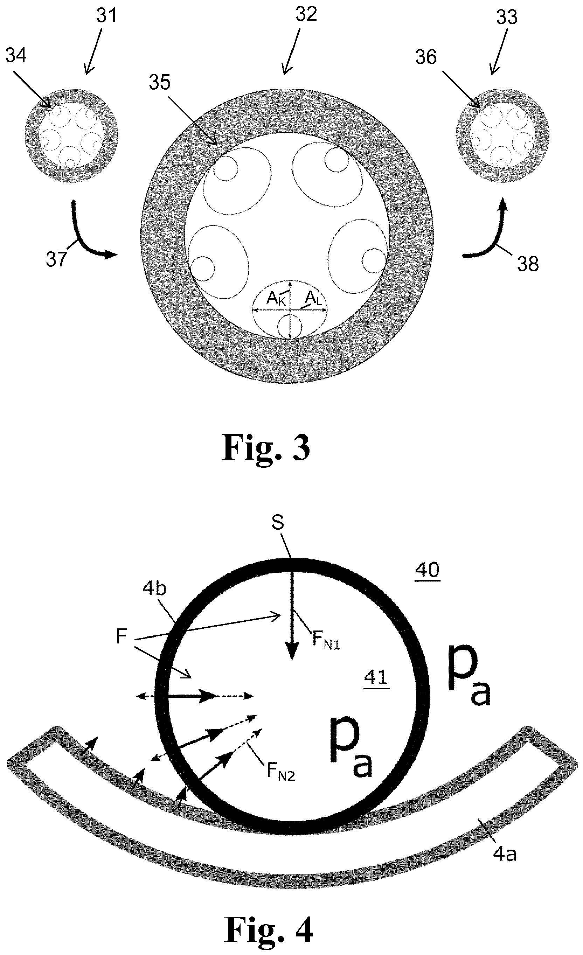

Beim Kollabier- und Elongierschritt wird den vormaligen rohrförmigen Antiresonanzelement-Vorformlinge der primären Vorform eine ovale Außenquerschnittsform aufgeprägt, indem im hohlen Kernbereich und in den rohrförmigen Antiresonanzelement-Vorformlingen derselbe Innendruck erzeugt und aufrechterhalten wird. **Figur 4** skizziert die dabei auftretenden Kräfteverhältnisse. Sowohl im hohlen Kernbereich 40 als auch in der Innenbohrung der Innen-Kapillare 4b herrscht beim Elongieren Umgebungsdruck $p_a$. Bei einem Innendruck von 2,36 mbar im Kapillar-Hohlraum (gegenüber dem außerhalb des Kapillare-Innenraums anliegenden Druck) wäre die Innen-Kapillare 4a während des Elongierens stabil. Ohne den Innendruck wirken Kräfte wie durch die Richtungspfeile F angedeutet. Das Verhältnis der normalen Kraft $F_{N1}$ im oberen Scheitelpunkt "S" zur resultierenden Normalkraft $F_{N2}$ an den Seiten der Innen-Kapillar-Wandung liegt zwischen 1,07 und 1,27 (1,07 < $F_{N1}/ F_{N2}$ < 1,27), Infolge dieses Kraftverhältnisses wird die Innen-Kapillare 4b beim Elongieren elliptisch, wobei die lange Achse der Ellipse tangential zur Innenwandung des Hüllrohres 4a und die kürzere Achse senkrecht dazu verlaufen.

Entsprechende Betrachtungen für das Hüllrohr 4a ergeben eine ovale Außenquerschnittsform, die durch ein Achsenlängenverhältnis $A_L/A_K$ gekennzeichnet ist, das zwischen 1,07 und 1,27 liegt (1,07 < $A_L/A_K$ < 1,27).

Die im Kollabier- und Elongierprozess auf diese Weise gebildete sekundäre Vorform hat einen Außendurchmesser von etwa 50 mm und eine aus äußerem Mantel und innerem Mantel zusammengesetzte Mantel-Wanddicke von 16,6 mm. Das Foto von **Figur 2** zeigt die oval geformten Hüllrohre. Die Innen-Kapillare sind messbar ebenfalls oval verformt, jedoch in einem so geringen Maß, dass die Verformung visuell nicht erkennbar ist.

Die sekundäre Vorform wird zu einer Antiresonanten Hohlkernfaser elongiert. Dazu werden alle Strukturelemente der ehemaligen Antiresonanzelement-Vorformlinge, also Hüllrohr 4a und Innen-Kapillare 4b, mit der oben erwähnten Versiegelungs- oder Verbindungsmasse verschlossen. Die Verschlussmasse ist dabei nur auf diejenige Stirnseite der Antiresonanzelement-Vorformlinge aufgebracht, die beim Faserziehprozess nach oben weist.

Dieselbe Stirnseite wird anschließend mit einem Halterohr aus Quarzglas verbunden, der gleichzeitig als Gasanschluss dient. Der Halter wird mittels der Versiegelungs- oder Verbindungsmasse am Überfangzylinder und am Mantelrohr fixiert. Beim Faserziehprozess wird die sekundäre Vorform bei vertikal orientierter Längsachse von oben kommend einer temperaturgeregelten Heizzone zugeführt und darin mit dem unteren Ende beginnend zonenweise erweicht. Die Heizzone wird auf eine Soll-Temperatur von etwa 2100 °C mit einer Regelgenauigkeit von +/- 0.1°C gehalten. Dadurch können Temperaturschwankungen im Heißformprozess auf weniger als +/- 0.5°C begrenzt werden. Gleichzeitig wird dem Kernbereich (Hohlkern) Gas zugeführt, so dass sich im Kernbereich ein Innendruck von 4 mbar einstellt.

Durch dem so geführten Faserziehprozess wird die ovale Querschnittsform der ehemaligen Strukturelemente der Antiresonanzelement-Vorformlinge zu einer runden Querschnittsform, so dass eine Antiresonante Hohlkernfaser mit darin eingebetteten Antiresonanzelementen erhalten wird, die eine runde Querschnittsform haben.

**Figur 3** zeigt schematisch die Verfahrensstufen des Prozesses. Aus der primären Vorform 30 mit Antiresonanzelement-Vorformlingen 34 mit rundem Querschnitt wird durch einen Elongier- und Kollabierprozess 37 eine sekundäre Vorform 32 mit elongierten Antiresonanzelement-Vorformlingen 35 mit ovaler Querschnittsform (gekennzeichnet durch die kurze Querschnittsachse $A_K$ und die langen Querschnittsachse $A_L$) und diese wird in einem Faserziehprozess 38 zu einer Antiresonante Hohlkernfaser 33 elongiert, die Antiresonanzelemente 36 mit runder Querschnittsform enthält.

**Patentansprüche**

1. Verfahren zur Herstellung einer Antiresonanten Hohlkernfaser, die einen sich entlang einer Faser-Längsachse erstreckenden Hohlkern und einen den Hohlkern umgebenden inneren Mantelbereich aufweist, der mehrere Antiresonanzelemente umfasst, mit den Verfahrensschritten:

    (a) Bereitstellen eines Mantelrohres, das eine Mantelrohr-Innenbohrung und eine Mantelrohr-Längsachse aufweist, entlang der sich eine von einer Innenseite und einer Außenseite begrenzte Mantelrohr-Wandung erstreckt,
    (b) Bereitstellen einer Anzahl von rohrförmigen Antiresonanzelement-Vorformlingen,
    (c) Anordnen der Antiresonanzelement-Vorformlinge an Soll-Positionen der Innenseite der Mantelrohr-Wandung unter Bildung einer primären Vorform, die einen hohlen Kernbereich und einen inneren Mantelbereich aufweist,
    (d) Weiterverarbeitung der primären Vorform zu einer sekundären Vorform, aus der die Hohlkernfaser gezogen wird, wobei die Weiterverarbeitung ein Elongieren und optional eine einmalige oder wiederholte Durchführung von einem oder mehreren der folgenden Heißformprozesse umfasst:

        (i) Kollabieren,
        (ii) Kollabieren und gleichzeitiges Elongieren,
        (iii) Aufkollabieren von zusätzlichem Mantelmaterial,
        (iv) Aufkollabieren von zusätzlichem Mantelmaterial und anschließendes Elongieren,
        (v) Aufkollabieren von zusätzlichem Mantelmaterial und gleichzeitiges Elongieren, und

    (e) Ziehen der sekundären Vorform zu der Hohlkernfaser,

    **dadurch gekennzeichnet, dass** beim Elongieren gemäß Verfahrensschritt (d) mindestens einem Teil der vormaligen rohrförmigen Antiresonanzelement-Vorformlinge der primären Vorform eine ovale Außenquerschnittsform aufgeprägt wird, indem im hohlen Kernbereich und in den rohrförmigen Antiresonanzelement-Vorformlingen derselbe Innendruck erzeugt und aufrechterhalten wird, und dass beim Ziehen der so erhaltenen sekundären Vorform zu der Hohlkernfaser gemäß Verfahrensschritt (e) in den elongierten, rohrförmigen Antiresonanzelement-Vorformlingen ein Überdruck gegenüber dem elongierten hohlen Kernbereich erzeugt und aufrechterhalten wird.

2. Verfahren nach Anspruch 1, **dadurch gekennzeichnet, dass** sich mindestens ein Teil der rohrförmigen Antiresonanzelement-Vorformlinge aus mehreren, miteinander verschachtelten Strukturelementen zusammensetzen, umfassend eine Hüllrohr und eine darin eingesetzte Innen-Kapillare, wobei zum Aufprägen der ovalen Außenquerschnittsform des Hüllrohres das Verhältnis der normalen Kraft im oberen Scheitelpunkt zur resultierenden Normalkraft an den Seiten des Hüllrohres zwischen 1,07 und 1,27 eingestellt wird.

3. Verfahren nach Anspruch 2 oder 3, **dadurch gekennzeichnet, dass** zum Aufprägen der ovalen Außenquerschnittsform der Innen-Kapillare das Verhältnis der normalen Kraft im oberen Scheitelpunkt zur resultierenden Normalkraft an den Seiten der Innen-Kapillare zwischen 1,1 und 1,05 eingestellt wird.

4.   Verfahren nach einem der vorhergehenden Ansprüche, **dadurch gekennzeichnet, dass** sich mindestens ein Teil der rohrförmigen Antiresonanzelement-Vorformlinge aus mehreren, miteinander verschachtelten Strukturelementen zusammensetzen und mindestens ein Hüllrohr und eine in dem Hüllrohr und parallel zur Hüllrohr-Längsachse verkaufende Innen-Kapillare umfassen, wobei die Hüllrohre eine ovale, vorzugsweise elliptische, Außenquerschnittsform mit dem Achsenlängenverhältnis AL/AK im Bereich zwischen 1,07 und 1,27 haben, und die Innen-Kapillare eine ovale, vorzugsweise elliptische, Außenquerschnittsform mit dem Achsenlängenverhältnis $A_L/A_K$ im Bereich zwischen 1,01 und 1,05 haben, und wobei jeweils die kürzeste Querschnittsachse $A_K$ von der Mantelrohr-Längsachse aus gesehen in radialer Richtung verläuft.

5.   Verfahren nach Anspruch 4, **dadurch gekennzeichnet, dass** nach dem Elongieren mindestens ein Teil der vormaligen Innen-Kapillare eine ovale, vorzugsweise elliptische, Außenquerschnittsform mit dem Achsenlängenverhältnis $A_L/A_K$ im Bereich zwischen 1,0 und 1,05 haben.

6.   Verfahren nach einem der vorhergehenden Ansprüche, **dadurch gekennzeichnet, dass** die primäre Vorform einen Außendurchmesser im Bereich von 20 bis 70 mm aufweist.

7.   Verfahren nach einem der vorhergehenden Ansprüche, **dadurch gekennzeichnet, dass** beim Elongieren die primäre Vorform kontinuierlich einer Heizzone mit einer Zufuhrgeschwindigkeit zugeführt, in der Heizzone zonenweise erweicht, und mit einer Abzugsgeschwindigkeit aus der Heizzone abgezogen wird, wobei die Zufuhrgeschwindigkeit so eingestellt wird, dass sich ein Durchsatz von mindestens 0,8 g/min, bevorzugt ein Durchsatz im Bereich von 0,8 g/min bis 85 g/min, und besonders bevorzugt ein Durchsatz im Bereich von 3,3 g/min bis 85 g/min, und eine mittlere Aufenthaltsdauer in der Heizzone von weniger als 25 min, bevorzugt eine mittlere Aufenthaltsdauer im Bereich von 5 bis 25 min ergeben.

8.   Verfahren nach Anspruch 8, **dadurch gekennzeichnet, dass** das Ausziehverhältnis beim Elongieren auf einen Wert im Bereich von 1,05 bis 10, vorzugsweise 1,05 bis 5 eingestellt wird.

9.   Verfahren nach einem der vorhergehenden Ansprüche, **dadurch gekennzeichnet, dass** zum Elongieren der primären Vorform Elongieren eine temperaturgeregelte Heizzone eingesetzt wird, deren Soll-Temperatur auf +/- 0.1 °C genau gehalten wird.

10.   Verfahren nach einem der vorhergehenden Ansprüche, **dadurch gekennzeichnet, dass** das Fixieren der Antiresonanzelement-Vorformlinge unter Einsatz einer amorphe $SiO_2$-Partikel enthaltenden Versiegelungs- oder Verbindungsmasse erfolgt.

11.   Verfahren nach einem der vorhergehenden Ansprüche, **dadurch gekennzeichnet, dass** beim Elongieren der primären Vorform offene Enden der Antiresonanzelement-Vorformlinge und/oder einzelne Strukturelemente der Antiresonanzelement-Vorformlinge und/oder ein etwaiger Ringspalt zwischen Rohrelementen mittels einer Versiegelungs- oder Verbindungsmasse verschlossen werden.

12.   Verfahren nach einem der vorhergehenden Ansprüche, **dadurch gekennzeichnet, dass** das Hüllrohr in einem Vertikalziehverfahren ohne Formwerkzeug mit zweistufigem Elongierprozess hergestellt wird, wobei in der ersten Elongierstufe ein Ausgangshohlzylinder mit vertikal orientierter Längsachse in einer Heizzone mit einer ersten Heizzonenlänge bereichsweise erweicht und aus dem erweichten Bereich ein Zwischenzylinder abgezogen wird, und der Zwischenzylinder in einer zweiten Elongierstufe mit vertikal orientierter Längsachse kontinuierlich einer Heizzone mit einer zweiten Heizzonenlänge, darin bereichsweise erweicht und aus dem erweichten Bereich ein Rohrstrang abgezogen, wobei die zweite Heizrohrlänge kürzer ist als die erste Heizrohrläng.[HM1]

13.   Verfahren nach einem der vorhergehenden Ansprüche, **dadurch gekennzeichnet, dass** Antiresonanzelement-Vorformlinge bereitgestellt werden, die jeweils mindestens ein Hüllrohr aufweisen, wobei das Hüllrohr anhand eine Vertikalziehverfahrens ohne Formwerkzeug erzeugt wird, das folgende Verfahrensschritte umfasst:

(aa) Bereitstellen eines Ausgangshohlzylinders aus Glas, der eine Zylinder-Längsachse und eine äußere sowie eine innere Zylindermantelfläche aufweist,
(bb) mechanische Bearbeitung der Zylindermantelflächen zur Einstellung von Ausgangshohlzylinder-Endmaßen, umfassend einen Außendurchmesser $C_a$ von mindestens 90 mm, einen Innendurchmesser $C_i$ und ein Durchmesserverhältnis $C_a/C_i$ von weniger als 2,8,
(cc) einen ersten Elongierprozess, bei dem der Ausgangshohlzylinder mit vertikal orientierter Längsachse kontinuierlich einer ersten Heizzone mit einer ersten Heizzonenlänge $L_{H1}$ zugeführt, darin bereichsweise erweicht und aus dem erweichten Bereich ein Zwischenzylinder abgezogen wird,

(dd) einen zweiten Elongierprozess, bei dem der Zwischenzylinder oder ein aus dem Zwischenzylinder durch Elongieren erhaltener elongierter Zwischenzylinder mit vertikal orientierter Längsachse kontinuierlich einer zweiten Heizzone mit einer zweiten Heizzonenlänge $L_{H2}$ zugeführt, darin bereichsweise erweicht und aus dem erweichten Bereich ein Rohrstrang mit einem Außendurchmesser $T_a$ und einem Innendurchmesser $T_i$ abgezogen wird, wobei gilt: $L_{H2} < L_{H1}$ und $T_a/T_i < 1{,}5$, und

(ee) Ablängen des Rohrstrangs zu Hüllrohren.

14. Verfahren zur Herstellung einer Vorform für eine Antiresonante Hohlkernfaser, die einen sich entlang einer Faser-Längsachse erstreckenden Hohlkern und einen den Hohlkern umgebenden inneren Mantelbereich aufweist, der mehrere Antiresonanzelemente umfasst, mit den Verfahrensschritten:

(a) Bereitstellen eines Mantelrohres, das eine Mantelrohr-Innenbohrung und eine Mantelrohr-Längsachse aufweist, entlang der sich eine von einer Innenseite und einer Außenseite begrenzte Mantelrohr-Wandung erstreckt,

(b) Bereitstellen einer Anzahl von rohrförmigen Antiresonanzelement-Vorformlingen,

(c) Anordnen der Antiresonanzelement-Vorformlinge an Soll-Positionen der Innenseite der Mantelrohr-Wandung unter Bildung einer primären Vorform, die einen hohlen Kernbereich und einen inneren Mantelbereich aufweist,

(d) Optionale Weiterverarbeitung der primären Vorform zu einer sekundären Vorform, für die Hohlkernfaser, wobei die Weiterverarbeitung ein Elongieren und optional eine einmalige oder wiederholte Durchführung von einem oder mehreren der folgenden Heißformprozesse umfasst:

(i) Kollabieren,

(ii) Kollabieren und gleichzeitiges Elongieren,

(iii) Aufkollabieren von zusätzlichem Mantelmaterial,

(iv) Aufkollabieren von zusätzlichem Mantelmaterial und anschließendes Elongieren,

(v) Aufkollabieren von zusätzlichem Mantelmaterial und gleichzeitiges Elongieren,

**dadurch gekennzeichnet, dass** beim Elongieren gemäß Verfahrensschritt (d) mindestens einem Teil der vormaligen rohrförmigen Antiresonanzelement-Vorformlinge der primären Vorform eine ovale Außenquerschnittsform aufgeprägt wird, indem im hohlen Kernbereich und in den rohrförmigen Antiresonanzelement-Vorformlingen derselbe Innendruck erzeugt und aufrechterhalten wird.

**Fig. 1**

**Fig. 2**

**Fig. 3**

**Fig. 4**

Europäisches
Patentamt

European
Patent Office

Office européen
des brevets

# EUROPÄISCHER RECHERCHENBERICHT

Nummer der Anmeldung

EP 19 18 6758

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GREGORY T. JASION ET AL: "Fabrication of tubular anti-resonant hollow core fibers: modelling, draw dynamics and process optimization", OPTICS EXPRESS, Bd. 27, Nr. 15, 10. Juli 2019 (2019-07-10), Seite 20567, XP055655469, DOI: 10.1364/OE.27.020567 | 1,6-9, 12-14 | INV. C03B37/012 C03B37/027 C03B23/047 |
| Y | * Seite 20570; Abbildungen 2,7 * * Seite 20575 - Seite 20576 * ----- | 2-5,10, 11 | |
| X | Fei Yu: "Hollow core negative curvature fibres" In: "University of Bath PhD.", 31. Dezember 2013 (2013-12-31), XP055656461, Seiten 59-74, | 1,6-9, 12-14 | |
| Y | * Seite 61 - Seite 62; Abbildungen 4.1,4.2 * * Seite 65 * ----- | 2-5,10, 11 | |
| Y | A F KOSOLAPOV ET AL: "Hollow-core revolver fibre with a double-capillary reflective cladding", QUANTUM ELECTRONICS., Bd. 46, Nr. 3, 29. März 2016 (2016-03-29), Seiten 267-270, XP055502520, GB ISSN: 1063-7818, DOI: 10.1070/QEL15972 * Seite 268; Abbildung 2 * ----- | 2-5 | RECHERCHIERTE SACHGEBIETE (IPC)<br><br>C03B |
| Y | US 2005/226578 A1 (MANGAN BRIAN J [GB] ET AL) 13. Oktober 2005 (2005-10-13) * Absätze [0018], [0026], [0027] * ----- | 10,11 | |
| A | DE 10 2005 028219 B3 (HERAEUS TENEVO GMBH [DE]) 12. Oktober 2006 (2006-10-12) * Absätze [0001], [0006], [0024], [0032] * ----- | 12,13 | |

Der vorliegende Recherchenbericht wurde für alle Patentansprüche erstellt

| Recherchenort | Abschlußdatum der Recherche | Prüfer |
|---|---|---|
| Den Haag | 13. Januar 2020 | Creux, Sophie |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 18 6758

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-01-2020

| Im Recherchenbericht angeführtes Patentdokument | Datum der Veröffentlichung | Mitglied(er) der Patentfamilie | Datum der Veröffentlichung |
|---|---|---|---|
| US 2005226578 A1 | 13-10-2005 | KEINE | |
| DE 102005028219 B3 | 12-10-2006 | CN 101189194 A | 28-05-2008 |
| | | DE 102005028219 B3 | 12-10-2006 |
| | | JP 5352231 B2 | 27-11-2013 |
| | | JP 2008540321 A | 20-11-2008 |
| | | US 2009019893 A1 | 22-01-2009 |
| | | WO 2006122904 A2 | 23-11-2006 |

Für nähere Einzelheiten zu diesem Anhang : siehe Amtsblatt des Europäischen Patentamts, Nr.12/82

EPO FORM P0461

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3136143 A1
- WO 2018169487 A1
- DE 102004054392 A1

**In der Beschreibung aufgeführte Nicht-Patentliteratur**

- **FRANCESCO POLETTI.** Nested antiresonant node-less hollow core fiber. *Optics Express,* 2014, vol. 22 (20